# EUROPEAN PATENT APPLICATION

(11) **EP 4 570 670 A2**
(43) Date of publication of application: **18.06.2025**
(21) Application number: 24216805.2
(22) Date of filing: 02.12.2024
(51) Int. Cl.: B64G 1/64, B25J 15/00, B64G 4/00

(54) **SYSTEMS, DEVICES, AND METHODS FOR PROVIDING ALTERNATE LOAD PATHS IN ROBOTIC INTERFACES**

(30) Priority: 15.12.2023 US 202363610863 P
(71) Applicant: MacDonald, Dettwiler and Associates Inc., Brampton, Ontario L6Y 6K7 (CA)
(72) Inventor: Grandy, Drew, Brampton, Ontario, L6Y 6K7 (CA); Pulogarajah, Kaarthic, Brampton, Ontario, L6Y 6K7 (CA); Raju, Selvan, Brampton, Ontario, L6Y 6K7 (CA); Van Toen, Carolyn, Brampton, Ontario, L6Y 6K7 (CA)
(74) Representative: Grünecker Patent- und Rechtsanwälte PartG mbB

(57) **Abstract**

Provided is a system and method for robotic interfacing. The system includes a first object having a grapple fixture and a plurality of outrigger support pillars. The system includes a second object having an end effector and a plurality of outrigger support arms. The plurality of outrigger support pillars couple to the plurality of outrigger arms to strengthen a previously designed interface between the end effector and the grapple fixture so that the interface is able to withstand increased loading for new applications.

## Description

### Technical Field

The following relates generally to robotic interfaces, and more particularly to systems and methods for outrigger support systems for robotic interfaces.

### Introduction

Robotic interfaces include grapple fixtures and end effectors (see, e.g., US Patent Numbers 4,929,009 entitled End Effector granted May 29, 1990 and 4,929,011 entitled Grapple Fixture granted May 29, 1990). However, during the lifetime of such systems, there may be an increased load on these grapple fixtures and end effectors than those for which they were originally designed.

Conventional systems include end effectors and grapple fixtures with increasing stance for increasing load capacity needs. Typically end effectors and grapple fixtures are implemented with larger stance for larger load carrying capacity requirements.

In order to overcome these limitations, an outrigger system as described herein may be implemented on instances of existing smaller end effectors and grapple fixtures to allow these to be used for applications with larger load carrying capacity requirements, in new applications.

Accordingly, there is a need for an improved system and method for outrigger support that overcomes at least some of the disadvantages of existing systems and methods.

### Summary

Provided is a system and method for robotic interfacing. The system includes a first object having a grapple fixture and a plurality of outrigger support pillars. The system includes a second object having an end effector and a plurality of outrigger support arms. The plurality of outrigger support pillars couple to the plurality of outrigger arms to strengthen a previously designed interface between the end effector and the grapple fixture so that the interface is able to withstand increased loading for new applications.

The first object and the second object may actuate between a released position and an engaged position.

When the first object and the second object are in the engaged position, the end effector connects and engages with the grapple fixture to hold the first object and the second object together in a first direction. The plurality of outrigger support arms engage with the plurality of outrigger support pillars to stabilize the outrigger support in two other dimensions.

The outrigger support arm may have a convex arcuate surface that mates with a concave arcuate surface of the outrigger support pillar.

The outrigger support arms may include a limit switch to detect when the joints between the outrigger support arm and the outrigger support pillar are seated in the engaged position.

The plurality of outrigger support arms may be two to five outrigger support arms that engage with a corresponding number of outrigger support pillars.

The first object may be mounted on a mounting plate to a space station.

The second object may include an umbilical connector for passing electrical and data connection to the robotic arm.

The system may further include a camera for machine vision alignment of the second object with the first object.

The first object may include additional outrigger support pillars for engaging with the outrigger support arms to provide additional support to the second object.

The additional outrigger support pillars may have a flat surface that contacts the outrigger support arms minimally as compared to the outrigger support pillars having an arcuate surface.

One or more of the outrigger support arms and one or more of the outrigger support pillars may have flat contacts. One or more of the outrigger support arms and one or more the outrigger support pillars may be convex and concave.

Provided is a method for outrigger support. The method includes capturing a dexterous adapter tool, disconnecting a dexterous adaptor tool and the dexterous end effector umbilical; releasing the dexterous adaptor tool and the dexterous end effector releases, and picking up the dexterous adaptor tool.

The outrigger support system may start in an engaged position.

Residual loads may develop in a robotic arm due to an initial misalignment. The robotic arm may spring back to initially misaligned position.

The method may further include stowing the dexterous adaptor tool.

Stowing the dexterous adaptor tool may include approaching a grapple fixture using a camera system vision target, performing end effector grapple of the grapple fixture, and seating outrigger support arms from the dexterous adapter tool into coupling blocks.

The method may further include connecting the end effector to grapple fixture umbilical.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figures 1A and 1B are block diagrams of an outrigger support system, in accordance with an embodiment,
Figures 2A, 2B, 2C, and 2D is an outrigger support system, in accordance with an embodiment,
Figures 3A, 3B, and 3C is an outrigger support system, in accordance with an embodiment,
Figure 4 is a flow chart of a method for capturing a dexterous adaptor tool, in accordance with an embodiment, and
Figure 5 is a flow chart of a method for stowing a dexterous adaptor tool, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article. Outrigger supports described herein may include outrigger grounding.

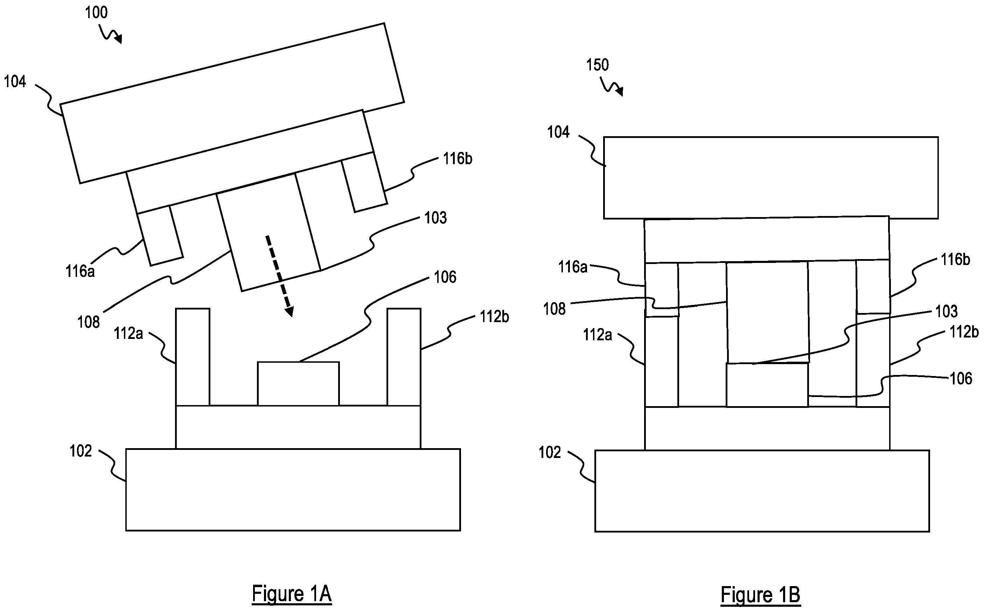

Referring to Figures 1A and 1B, described therein is an outrigger support system 100 for connecting a first object 102 with a second object 104, in accordance with an embodiment.

The first object 102 may be a relatively stationary object such as a space station. The second object 104 may be part of a large arm on a robotic arm.

The first object 102 includes a grapple fixture 106. The second object 104 includes an end effector 108 for attaching to the grapple fixture 106 of the first object 102.

The outrigger system 100 provides an alternate load path around an interface 103 between the grapple fixture 106 and the end effector 108. The outrigger support system 100 strengthens the interface 103, increasing the load capacity of the connection. 108. The outrigger support system 100 includes a variant of the grapple fixture 106 to decouple the interface, such that only axial pull loads are resisted at the interface. The remaining loads are resisted through the outrigger support system 100. The outrigger support system 100 has a volume such that it does not impair or impede the end effector 108 from performing nominal payload.

The first object 102 includes a plurality of outrigger support pillars 112a, 112b around the grapple fixture 106.

The second object 104 includes a plurality of outrigger support arms 116a, 116b around the end effector 108.

The outrigger support pillars 112a, 112b couple to the outrigger arms 116a, 116b (respectively) to strengthen the interface 103. The outrigger system 100 operates to strengthen the interface 103 without damaging the end effector 108 and the grapple fixture 106, while still allowing nominal operations.

The outrigger system 100 gets more strength out of the existing interface 103 such that the outrigger system 100 may be used for new applications including a dexterous adapter tool that allows a large robotic arm to perform dexterous operations (such that loads from the large arm picking up the tool do not exceed the allowable loads for the dexterous interface), a two ended dexterous robotic arm version, and/or walking of a robotic arm. The outrigger system 100 protects the interface 103 from overloading.

The grapple fixture 106 may not have a probe. The grapple fixture 106 may not have hirth teeth on its coupling interface. The grapple fixture 106 may have the same grapple probe but does have hirth teeth at its base. Where the end effector 108 and the grapple fixture 106 are not coupled (i.e. probe base does not have hirth teeth and it is compliant), this prevents overloading of the interface 103 during loading events.

The outrigger system 100 does not hinder the end effectors functionality to also perform dexterous tasks with smaller grapple fixtures.

The outrigger system 100 actuates between two positions: a released position (Figure 1A), and an engaged position 150 (Figure 1B). In the engaged position 150, of the outrigger system 150 the end effector 108 is rigidized to the grapple fixture 106.

When the outrigger system 150 is engaged, all loads are carried through the outrigger support arms 116a, 116b, and the outrigger support pillars 112a, 112b, except for axial pull loads, which are carried through the end effector 108 and grapple fixture 106.

The actuation between states 100, 150 is achieved by a torquer of the end effector 108 or an end effector 108 grappler. The actuation between states 100, 150 may be achieved by flight crew for maintenance.

The outrigger system 150 in engaged state may withstand loads during loading events that were not originally conceived during design of the end effector - grapple fixture system (from large arm capture of a dexterous adapter tool, or from a walking version of a previously single-ended robotic arm). The outrigger support system 100 may provide indication of the state of the robotic arm onto which it is mounted (e.g., where there is no state sensing on the grapple fixture-side).

The outrigger system 150 may remain in engaged state during loading events such as space station induced accelerations.

The outrigger system 100, 150 may provide fit into an airlock for intravehicular maintenance of the end effector and/or grapple fixture.

The outrigger system 100 may withstand launch and undergo deployment.

The outrigger system 100 may allow for the loads to bypass the force moment sensor of an end effector, thus preventing damage of this sensor.

Advantageously, the outrigger support system 100 may not have many moving parts. The outrigger support system 100 may not have flexure/compliance under dexterous grappling. The outrigger support system 100 may not impact the torque life of the end effector. The outrigger support system 100 may have low difficulty to implement state sensing. The outrigger support system 100 may have low difficulty to manage thermoelastic distortion. The outrigger support system 100 may be managed through shimming of the custom dexterous grapple fixture 106.

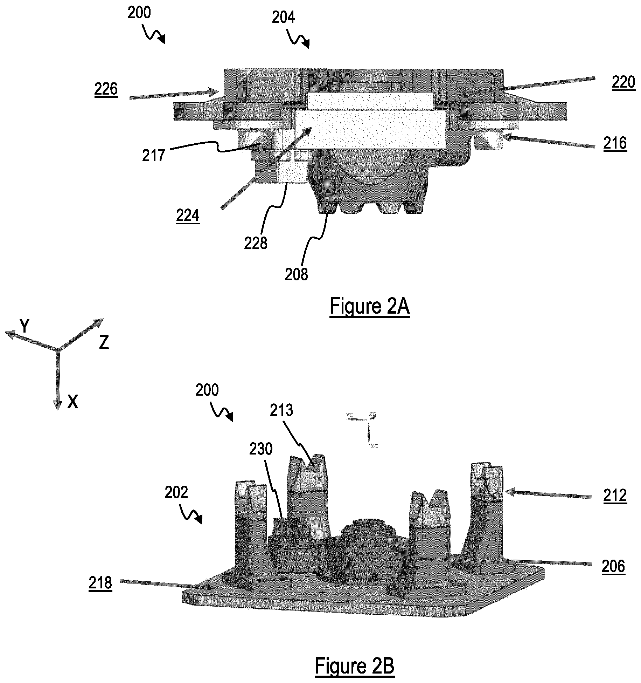

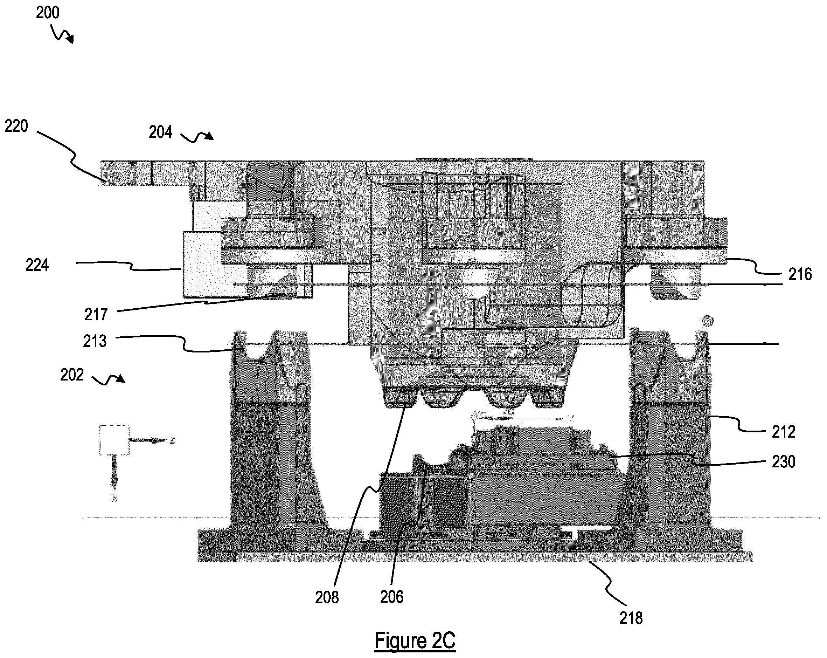

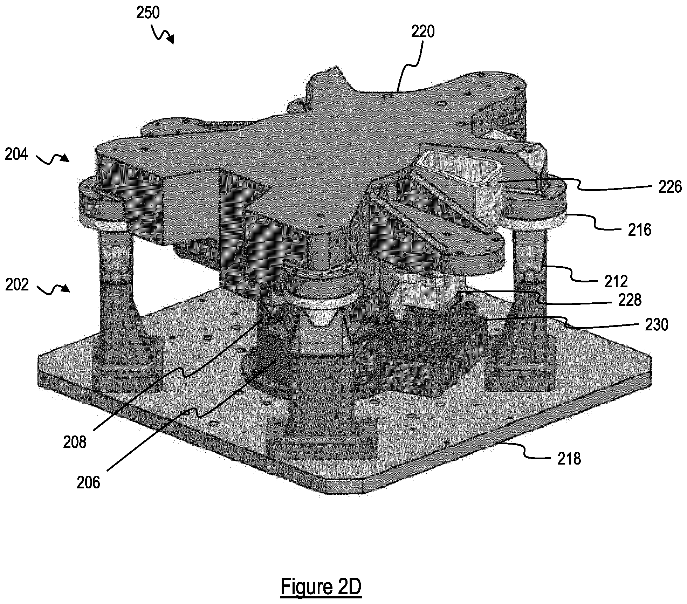

Referring to Figures 2A, 2B, 2C, and 2D, described therein is an outrigger support system 200 for connecting a first object 202 with a second object 204, in accordance with an embodiment. The first object 202 includes a grapple fixture 206. The second object 204 includes an end effector 208 for attaching to the grapple fixture 208 of the first object 202. The outrigger system 202 actuates between two positions: a released position (Figures 2C), and an engaged position 250 (Figure 2D).

The first object 202 includes the grapple fixture 206 and a plurality of outrigger support pillars 212. The first object 202 may be mounted on a mounting plate 218.

The second object 204 includes the end effector 208 and a plurality of outrigger support arms 216.

When the outrigger support system is connected 250, as shown in Figure 2D, the end effector 208 connects and engages with the grapple fixture 206 to hold the first object 202 and the second object 204 together in the X direction.

The plurality of outrigger support arms 216 engage with a plurality of outrigger support pillars 212 to stabilize the outrigger support in two dimensions (e.g., dimension Y and Z). The outrigger support arm 216 has a convex arcuate surface 217 that mates with a concave arcuate surface 213 of the outrigger support pillar 212. In alternative embodiments, the outrigger support arm 216 has a concave surface that mates with a corresponding convex surface of the outrigger support pillar 212. Not all of the outrigger support arms 216 and the outrigger support pillars 212 are necessarily convex/concave. One or more of the outrigger support arms 216 and one or more of the outrigger support pillars 212 may have flat contacts.

The outrigger support arms 216 may include a limit switch to detect when the joints between the outrigger support arm 216 and the outrigger support pillar 212 are seated in the coupling position, as shown at Figure 2D.

The plurality of outrigger support arms 216 are four outrigger support arms 216 that engage with four outrigger support pillars 212. In alternative embodiments, the plurality of outrigger support arms 216 are three or more outrigger support arms 216, and the plurality of outrigger support pillars 212 are three or more outrigger support pillars 212.

The second object 204 may be mounted on a housing 220.

The second object 204 may include a camera 224 for machine vision alignment of the second object 204 with the first object 202.

The second object 204 may include an umbilical connector 226 for passing electrical and data connection to e.g., a robotic arm. The second object 204 may have an electrical connector 228 that connects with and passes data and power to and from an electrical connector 230 on the first object 202.

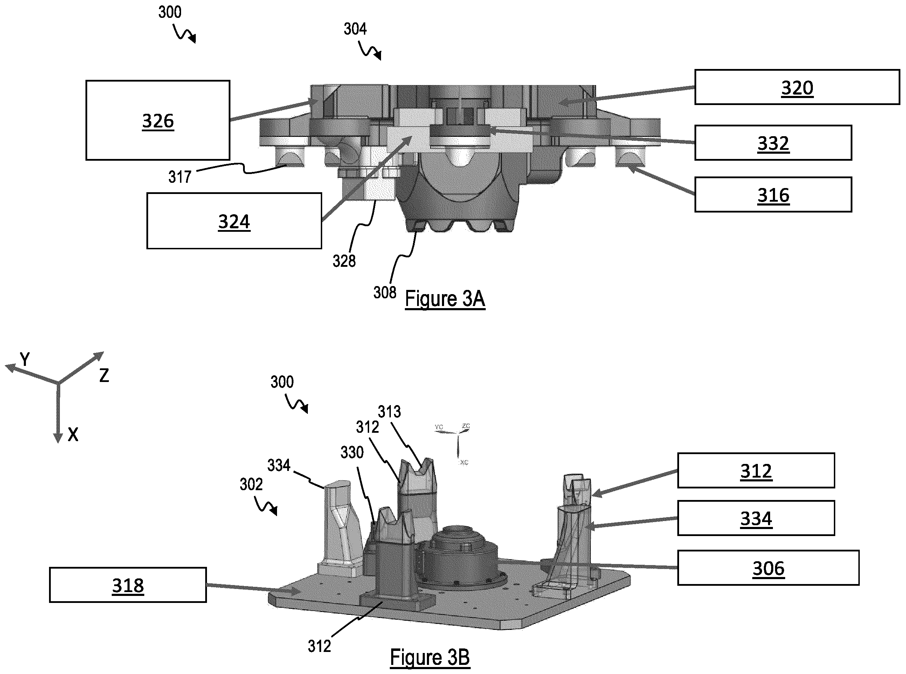

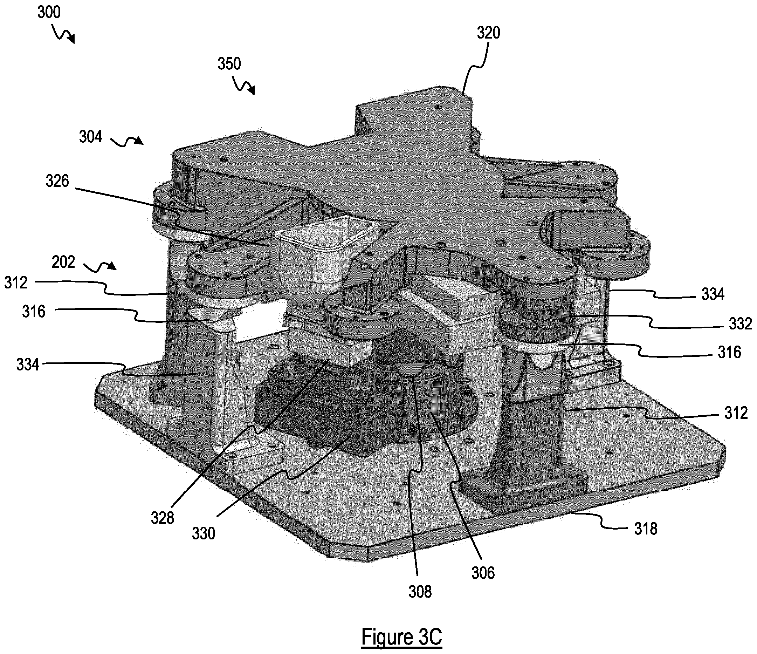

Referring to Figures 3A, 3B, and 3C, described therein is an outrigger support system 300 for connecting a first object 302 with a second object 304, in accordance with an embodiment. The first object 302 includes a grapple fixture 306. The second object 304 includes an end effector 308 for attaching to the grapple fixture 308 of the first object 302. The outrigger system 302 actuates between two positions: a released position (Figures 3A and 3B), and an engaged position 350 (Figure 3C).

The first object 302 includes the grapple fixture 306 and a plurality of outrigger support pillars 312. The first object 302 may be mounted on a mounting plate 318.

The first object 302 includes additional outrigger support pillars 334.

The second object 304 includes the end effector 308 and a plurality of outrigger support arms 316. The end effector 308 may include a spacer 332 to provide increased length to the outrigger support arm 316.

When the outrigger support system is connected 350, as shown in Figure 3C, the end effector 308 connects and engages with the grapple fixture 306 to hold the first object 302 and the second object 304 together in the X direction.

The plurality of outrigger support arms 316 engage with a plurality of outrigger support pillars 312 to stabilize the outrigger support in two dimensions (e.g., dimension Y and Z). The outrigger support arm 316 has a convex arcuate surface 317 that mates with a concave arcuate surface 313 of the outrigger support pillar 312. One or more of the outrigger support arms 316 and one or more of the outrigger support pillars 312 may have flat contacts. Not all of the outrigger support arms 316 and the outrigger support pillars 312 are convex/concave.

In alternative embodiments, the outrigger support arm 316 has a concave surface that mates with a corresponding convex surface of the outrigger support pillar 312.

The additional outrigger support pillars 334 engage with the outrigger support arms 316 to provide additional support to the second object 304. The additional outrigger support pillars 334 to not have a convex or concave surface. The additional outrigger support pillars 334 may have a flat surface that contacts the outrigger support arms 316 minimally as compared to the outrigger support pillars 312. A benefit of the flat contact is that it takes up less volume where there are constraints on design volume. The outrigger support arms 316 may include a limit switch to detect when the joints between the outrigger support arm 316 and the outrigger support pillar 312 are seated in the coupling position, as shown at Figure 3C.

The plurality of outrigger support arms 316 are five outrigger support arms 316 that engage with three outrigger support pillars 312 and two additional outrigger support pillars 334. In alternative embodiments, the plurality of outrigger support arms 316 are three or more outrigger support arms 316, and the plurality of outrigger support pillars 312 are three or more outrigger support pillars 312, and the plurality of additional outrigger support pillars 334 are two or more outrigger support pillars 334.

The second object 304 is mounted on a housing 320.

The second object 304 may include a camera 324 for machine vision alignment of the second object 304 with the first object 302.

The second object 304 may include an umbilical connector 326 for passing electrical and data connection to e.g., a robotic arm. The second object 304 may have an electrical connector 328 that connects with and passes data and power to and from an electrical connector 330 on the first object 302.

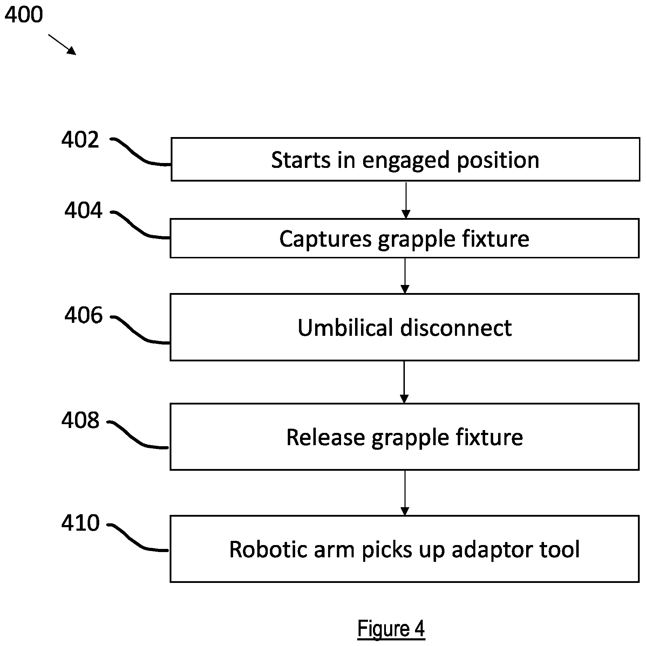

Referring to Figure 4, illustrated therein is a method 400 for capturing a dexterous adaptor tool, in accordance with an embodiment.

At 402, the outrigger support system starts in an engaged position.

At 402, a robotic arm in active or limp captures a dexterous adapter tool. The rob is pulled towards a grapple fixture. The residual loads develop in the robotic arm due to an initial misalignment.

At 404, the dexterous adaptor tool and the dexterous end effector umbilical is disconnected.

At 406, the dexterous adaptor tool and the dexterous end effector releases the grapple fixture. The robotic arm springs back to initially misaligned position. Loads due to this initial misalignment may not be a concern because the grapple fixture variant only transmits loads in axial pull and the grapple fixture has a higher load capacity for forces in the absence of moments. The grapple fixture grapple probe design provides compliance.

At 408, the robotic arm picks up the dexterous adaptor tool.

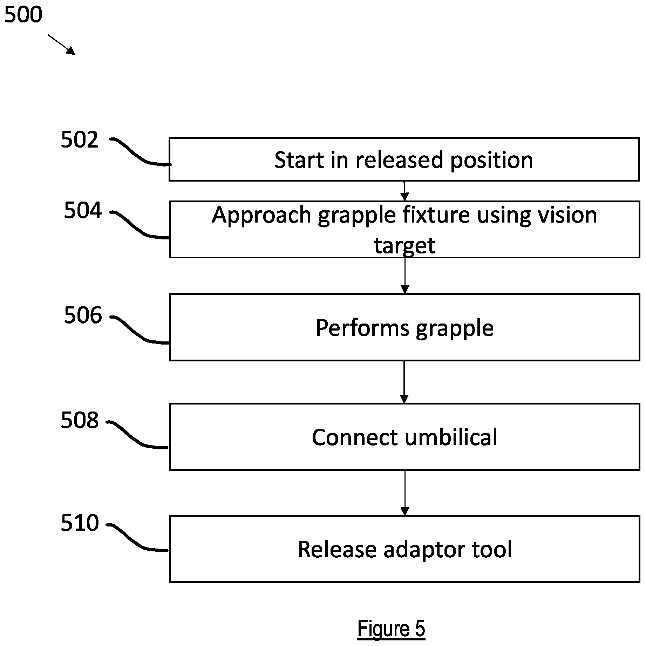

Referring to Figure 5, illustrated therein is a method 500 for stowing a dexterous adaptor tool, in accordance with an embodiment.

At 502, an outrigger support system starts in released position.

At 504, the robotic arm approaches grapple fixture, using a camera vision target.

At 506, the robotic arm performs end effector grapple of the grapple fixture. Outrigger support arms are seated into coupling blocks. The grapple fixture variant provides preload against outrigger support arms.

At 508, end effector to grapple fixture umbilical connects.

At 510, the robotic arm releases.

While the above description provides examples of one or more apparatus, methods, or systems, it will be appreciated that other apparatus, methods, or systems may be within the scope of the claims as interpreted by one of skill in the art.

## Claims

1. A system for outrigger support, the system comprising:
a first object having a grapple fixture and a plurality of outrigger support pillars; and
a second object having an end effector and a plurality of outrigger support arms;
wherein the plurality of outrigger support pillars couple to the plurality of outrigger support arms to strengthen an interface between the end effector and the grapple fixture.

2. The system of claim 1, wherein the first object and the second object actuate between a released position and an engaged position.

3. The system of claim 2, wherein when the first object and the second object are in the engaged position, the end effector connects and engages with the grapple fixture to hold the first object and the second object together in a first direction; and
wherein the plurality of outrigger support arms engage with the plurality of outrigger support pillars to stabilize the outrigger support in two other dimensions.

4. The system of claim 1, wherein the outrigger support arm has a convex arcuate surface that mates with a concave arcuate surface of the outrigger support pillar.

5. The system of claim 2, wherein the outrigger support arms include a limit switch to detect when the joints between the outrigger support arm and the outrigger support pillar are seated in the engaged position.

6. The system of claim 1, wherein the plurality of outrigger support arms are two to five outrigger support arms that engage with a corresponding number of outrigger support pillars.

7. The system of claim 1, wherein the first object is mounted to a mounting plate on a space station and/or wherein the second object includes an umbilical connector for passing electrical and data connection to a robotic arm.

8. The system of claim 1 further comprising a camera for machine vision alignment of the second object with the first object.

9. The system of claim 1, wherein the first object includes additional outrigger support pillars for engaging with the outrigger support arms to provide additional support to the second object.

10. The system of claim 9, wherein the additional outrigger support pillars have a flat surface that contacts the outrigger support arms minimally as compared to the outrigger support pillars having an arcuate surface.

11. The system of claim 1, wherein one or more of the outrigger support arms and one or more of the outrigger support pillars have flat contacts; and wherein one or more of the outrigger support arms and one or more of the outrigger support pillars are convex/concave.

12. A method for outrigger support, the method comprising:
capturing a dexterous adapter tool;
disconnecting a dexterous adaptor tool and a dexterous end effector umbilical;
releasing the dexterous adaptor tool and a dexterous end effector releases; and
picking up the dexterous adaptor tool.

13. The method of claim 12, wherein residual loads develop in a robotic arm due to an initial misalignment, and wherein the robotic arm springs back to initially misaligned position.

14. The method of claim 12 further comprising stowing the dexterous adaptor tool;
wherein stowing the dexterous adaptor tool comprises:
approaching a grapple fixture using a camera system vision target;
performing end effector grapple of the grapple fixture; and
seating outrigger support arms from the dexterous adapter tool into coupling blocks.

15. The method of claim 14 further comprising connecting the end effector to grapple fixture umbilical.
